# EUROPEAN PATENT APPLICATION

(11) **EP 2 554 324 A1**
(43) Date of publication of application: **06.02.2013**
(21) Application number: 12178800.4
(22) Date of filing: 01.08.2012
(51) Int. Cl.: B23P 15/00, B23K 11/06, F16J 15/12

(54) **Apparatus for welding continuous strips wound on a support ring**

(30) Priority: 05.08.2011 IT MI20111497
(71) Applicant: GSKET S.r.l., 26013 Crema (CR) (IT)
(72) Inventor: Barozzi, Gian Piero, 26013 Crema (CR) (IT)
(74) Representative: Raimondi, Margherita

(57) **Abstract**

Apparatus for welding continuous strips (1a,1b) wound on a support ring (113), comprising at least means (2) for feeding the strips (1a,1b) to be wound on the support ring (113), an assembly (100) for winding said strips, an assembly (200) for applying radial pressure onto the strips, comprising a first circular jaw (211) and a second circular jaw (212), which are arranged opposite each other and spaced in the longitudinal direction (X-X) by an amount corresponding to the width of the finished seal, and an assembly (300) for welding one (1a) of said strips (1a,1b), said pressing assembly (200) and said welding assembly (300) being coaxial, wherein said welding assembly (300) comprises a first electrode (310) and a second electrode (320) which are arranged inside the jaws (211,212) of the pressing assembly so as to face each other and have a diameter smaller than that of the said jaws (211,212), each electrode being insulated both from the other electrode and from the jaws by means of rings (330) made of insulating material, and wherein the electrodes act simultaneously with pressure in the radial direction (Y-Y) on the strips (1a,1b).

## Description

The present invention relates to an apparatus for welding strips wound on a support ring, comprising a pressing assembly and a welding assembly arranged in the same circumferential area and acting simultaneously in the radial direction on the said strips.

In the art numerous types of seals made in the form of rings and able to provide a static frontal sealing action, for example for connecting pipes, are known.

It is also known that, for the industrial production of these types of seals, it is required to wind in a spiral two strips superimposed on each other and with physical and mechanical properties very different from each other, winding in particular a first strip with a high mechanical strength, for example made of steel, which forms the support for the second strip made of material with optimum insulating and sealing properties, but with an inferior mechanical strength.

Also known are machines which form said seals by means of a semi-manual operation, which requires constant monitoring and the assistance of an operator fully assigned to the machine, or automatically, as illustrated in EP 0,707,906 which describes an automatic machine for the production of seals obtained by means of the spiral winding of strips with different physical and mechanical properties onto a support ring, which machine comprises means for feeding said support rings to a mandrel; means for feeding the strips to be wound to the support ring, an assembly for applying radial pressure onto said rings, and an assembly for welding one of said strips for starting winding and for closing the seal once winding has been completed.

Although performing their function, these machines nevertheless have a number of drawbacks arising from the fact that they do not have means for retaining the seal in the direction perpendicular to its axis of rotation, resulting in a lack of planarity of the finished seal which causes also defects in the final welds, said defects being worsened by the fact that welding is performed by the corresponding assembly in a circumferential position of the spiral distant from the position of the pressing assembly in the radial direction of the spiral itself.

Further examples of machines according to the prior art are described in GB 2,258,018 in which a welding assembly is arranged separate from the pressing assembly and is operated so as to move towards the seal in a direction perpendicular to the operating direction of the pressing assembly.

In addition to the fact that the double device involves an increase in the dimensions, power supply means and control means for the synchronized operation of the two assemblies, in this case also the defects mentioned above arise since welding is performed in a zone different from the pressing zone.

JP 8-226544 describes a conventional welding assembly which acts on the metal strip at the start and at the end of winding, but nothing may be deduced with regard to the position and interaction of the pressing assembly.

All these solutions of the prior art moreover have the drawback that, by performing welding in a position different from that of the pressing assembly, the steel strip, since it is free along the section between the pressing point and the welding point, tends to react elastically, causing a loss of compactness of the seal in the radial direction.

The technical problem which is posed, therefore, is to provide an apparatus and a machine comprising such an apparatus which provides a solution to the abovementioned problems of the prior art.

In connection with this problem it is also required that the apparatus should have small dimensions, so that it is possible to reduce the overall dimensions of the machines, that it should be easy and inexpensive to produce and assemble and that it should be able to be installed easily also on machines which are already produced.

These results are obtained according to the present invention by an apparatus for welding strips, with different properties, wound onto a support ring according to the characteristic features of Claim 1 and by a machine comprising this apparatus according to the characteristic features of Claim 13.

Further details may be obtained from the following description of a non-limiting example of embodiment of the subject of the present invention provided with reference to the accompanying drawings in which:
- Figure 1:: shows a lateral perspective view of an example of embodiment of the apparatus according to the present invention;
- Figure 2:: shows a front view of the apparatus of Fig. 1 ;
- Figure 3:: shows a partial schematic cross-section along the plane indicated by III-III in Fig. 2;
- Figure 4:: shows a perspective view of the apparatus during winding of the strips;
- Figure 5:: shows a partial schematic cross-section of the seal being wound onto the support ring;
- Figure 6:: shows an exploded view of the welding assembly and
- Figure 7:: shows an exploded view of the assembly for energizing the welding assembly.

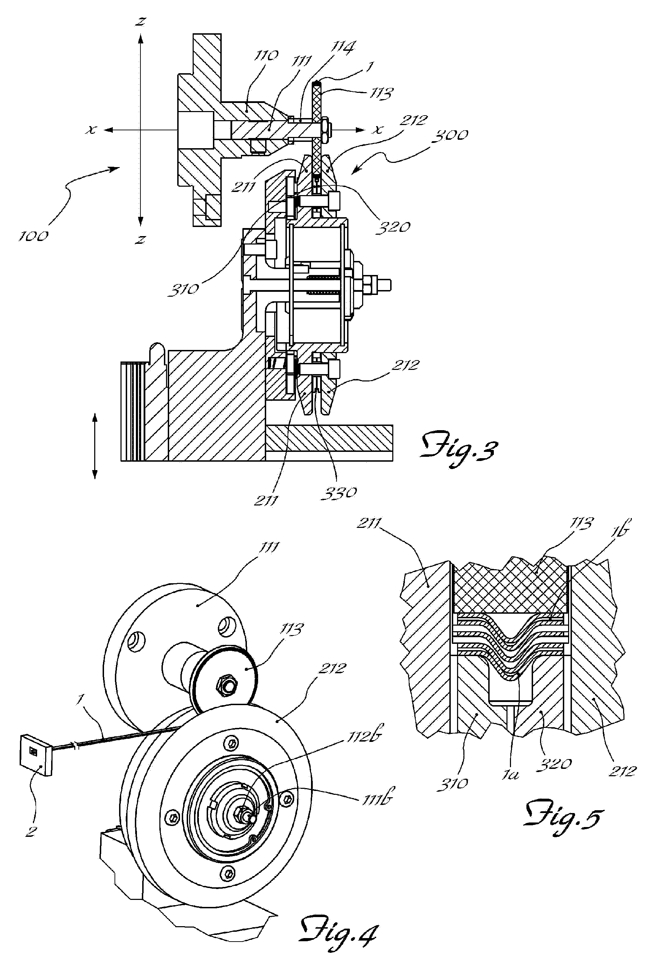

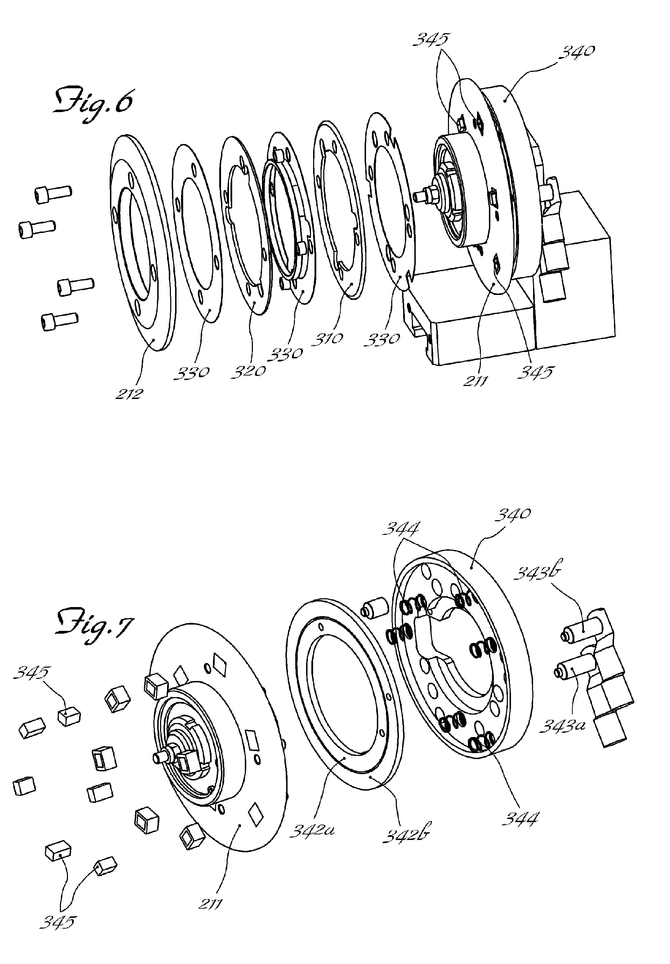

As shown and assuming solely for the sake of convenience of description and without any limitation of meaning a set of three reference axes in a longitudinal direction X-X, corresponding to the axis of rotation of the seal, vertical direction Z-Z perpendicular to the longitudinal direction and corresponding to the direction of movement of the pressing and welding assembly towards/away from the seal, and a radial direction Y-Y, perpendicular to the two other directions, the apparatus according to the present invention comprises essentially:
- an assembly 100 for winding the strips 1, specifically a strip 1a made of material such as steel, with optimum mechanical properties, and a strip 1b with optimum sealing properties, supplied by feeders 2 which are conventional per se and not shown nor described in detail, which assembly comprises a mandrel 110 which rotates about the longitudinal axis X-X and which has, inserted inside it, a pin 111 for supporting a ring 113, of suitable internal and external diameter, onto which the seal will be wound and which is housed inside an annular seat of the pin 111 and locked in position in the longitudinal direction X-X by means of a locking nut 112b suitable for mating with a corresponding end thread 111b of the pin 111; in the case of a strip with a smaller width in the longitudinal direction X-X, shown in the figures, the ring 113 has **a** corresponding reduced thickness and is kept locked on the mandrel by means of spacers 114 which have a thickness variable depending on the width of the strips to be wound;
- an assembly 200 for pressing in the radial direction Y-Y and containing in the axial direction X-X the strips 1 being wound, comprising in detail a first circular jaw 211 and a second circular jaw 212, which are situated opposite each other; preferably the first jaw 211 is axially fixed to the body of the apparatus, while the second jaw 212 may be displaced in the longitudinal direction X-X with respect to the first jaw in order to vary the relative distance depending on the width, in the longitudinal direction, of the strips 1 to be wound;
   the pressing assembly 200 also comprises means (not shown) for pushing the assembly along the vertical direction Z-Z and recall means, such as a cylinder or the like (not shown) for operating the assembly 200 in the opposite direction to the pushing direction, as will become clear from the following description of operation of the apparatus;
- a welding assembly 300 coaxially arranged between the two circular jaws 211 and 212 and comprising a first electrode 310 and a second electrode 320 which are arranged inside the jaws 211,212 of the pressing assembly so as to face each other axially and have a diameter smaller than that of the jaws 211,212; each electrode is insulated both from the other electrode and from the jaws by means of rings 330 made of insulating material (Fig. 6) and, as shown in Fig. 5, the electrodes also form the elements for pressing in the radial direction the strips during winding.

The rotating electrodes are energized by an energizing assembly comprising (Fig. 7) a cover 340 housing internally two fixed conducting rings 342a and 342b which are energized by means of respective conducting pins 343a,343b which are also fixed and connected to the external power supply; the conducting discs are axially pushed by springs 344 against contact brushes 345 which in turn make contact axially with the electrodes 310 and 320 in the longitudinal direction X-X.

With the configuration described above the operating principle of the apparatus is as follows:
- the pressing assembly 200 and welding assembly 300 are prepared with the jaws 211 and 212 axially spaced in the longitudinal direction X-X by an amount corresponding to the width of the strips 1 to be wound; in particular since the graphite strip 1b is normally wider than the steel strip 1a the distance between the two jaws 211,212 is preferably greater than the width of the steel strip 1a of smaller width and less than the width of the graphite strip 1b of greater width.
- the electrodes 310 and 320 are correspondingly arranged coaxially inside the said jaws;
- the support ring 113 is mounted on the mandrel 111 so that its circumferential edge is radially inserted between the jaws 211 and 212 and axially centred with respect to them, being locked in position by means of the spacers 114a and the nut 112b;

- the strip 1a with optimum mechanical properties is fed to the support ring, being inserted between the two jaws 211 and 212;
- upon completion of the first turn of the strip 1a initial welding of the steel strip 1a itself is performed so as to form the inner ring of the seal; this welding operation is performed by the electrodes 310,320 which, in addition to exerting pressure in the radial direction Y-Y, are also energized simultaneously so as to perform welding.
- winding of the strips 1a and 1b is started until the programmed diameter is reached; during winding, the planarity of the seal in the axial direction X-X is ensured by the jaws 211 and 212 which retain the strips in the longitudinal direction X-X, determining also the width of the finished seal in the axial direction X-X following the compression exerted, while the compactness of the seal is ensured by the pushing force in the radial direction of the pressing assembly 200 which is recalled towards the support ring by the action of the pneumatic cylinder (not shown), producing a thrust in the radial direction by the electrodes 310,320 which, during winding, are not energized;
- once the programmed diameter has been reached, winding of the strip 1b is stopped and, in a zone where two sections of the strip 1a are superimposed, final welding is performed so as to close the spiral, energizing the discs 342a,342b which in turn energize the contact brushes 345a,345b which make contact with the electrodes 310,320 which, emitting an impulse, perform welding while keeping at the same time the seal compressed in the radial direction;
- the cylinder recalling the pressing assembly is operated so as to free the seal from the axial volume of the jaws such that finished seal may be unloaded and the apparatus reset to perform winding of the next seal.

It is therefore clear how, with the apparatus according to the invention, it is possible to achieve welds of seals which are of better quality, welding itself being performed by the electrodes 310,320 which also form the elements with a pressing surface which keeps the strips 1 well compacted in the radial direction; in addition, retention of the strips 1 inside the jaws 211,212 during winding prevents any deviation of the strips in the transverse direction, thus ensuring an improved planarity of the finished seal which increases its characteristics, also helping improve the quality of the final weld.

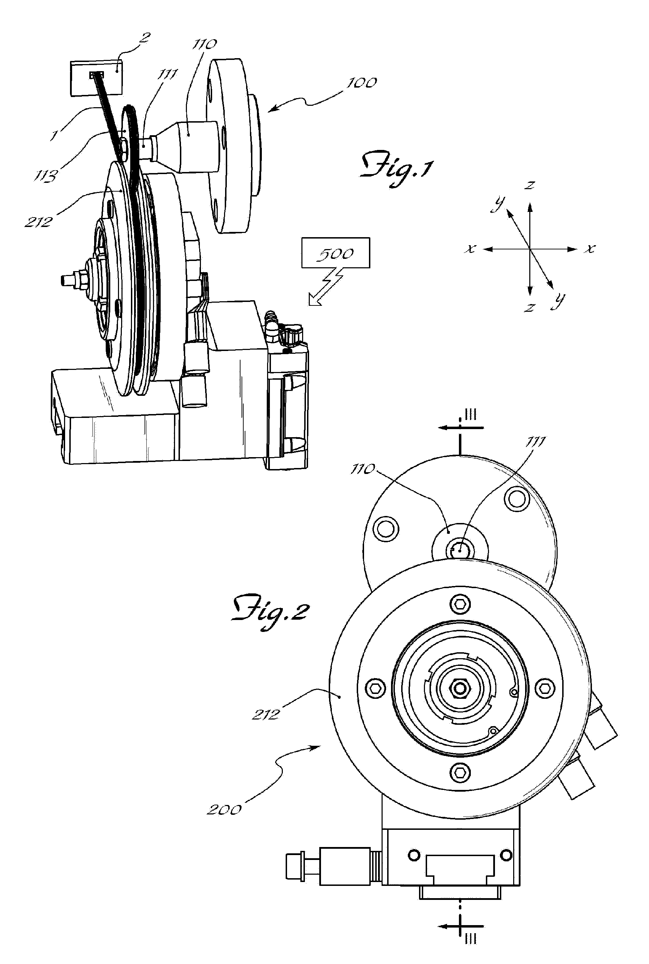

According to the invention it is also envisaged that the apparatus may be mounted on machines (not shown) for spirally winding seals whether they be of the manual, semi-manual or automatic type, it being envisaged that the various operations and working sequences are controlled by programming devices schematically indicated by 500 in Fig. 1. In connection with winding machines there is also a reduction in the overall dimensions of these machines, since the welding assembly is no longer situated at a distance from the pressing assembly but is combined with the pressing assembly itself. Although described in connection with certain constructional forms and certain preferred examples of embodiment of the invention, it is understood that the apparatus may be used also in sectors different from the seal forming sector and that the scope of protection of the present patent is defined solely by the following claims.

## Claims

1. Apparatus for welding continuous strips (1a, 1b) with different mechanical properties wound on a support ring (113), comprising at least means (2) for feeding the strips (1a, 1b) to be wound on the support ring (113), an assembly (100) for winding said strips, an assembly (200) for applying radial pressure onto the strips, comprising a first circular jaw (211) and a second circular jaw (212), which are arranged opposite each other and spaced in the longitudinal direction (X-X) by an amount corresponding to the width of the finished seal, and an assembly (300) for welding one (1a) of said strips (1a, 1b), **characterized in that**:
said pressing assembly (200) and said welding assembly (300) are coaxial and **in that** said welding assembly (300) comprises a first electrode (310) and a second electrode (320) which are arranged inside the jaws (211,212) of the pressing assembly so as to face each other and have a diameter smaller than that of the said jaws (211,212), each electrode being insulated both from the other electrode and from the jaws by means of rings (330) made of insulating material and **in that** the electrodes act simultaneously with pressure in the radial direction (Y-Y) on the strips (1a, 1b) .

2. Apparatus according to Claim 1, **characterized in that** the first jaw (211) is axially fixed to the body of the apparatus, while the second jaw (212) may be displaced in the longitudinal direction (X-X) relative to the first jaw.

3. Apparatus according to Claim 1, **characterized in that** the pressing assembly (200) comprises means for pushing the assembly in the vertical direction (Z-Z) and means for moving the pressing assembly (200) in the opposite direction to the pushing direction.

4. Apparatus according to Claim **3**, **characterized in that** said pushing direction is towards the strips (1a, 1b) being wound.

5. Apparatus according to Claim 1, **characterized in that** the welding assembly (300) comprises an energization assembly comprising a cover (340) housing internally two fixed conducting rings (342a,342b) which are energized by means of respective conducting pins (343a,343b) which are also fixed and connected to the external electric power source; springs (344) for providing an axial thrust in the longitudinal direction (X-X) against contact brushes (345) which in turn make contact with the electrodes (310,320).

6. Apparatus according to Claim 1, **characterized in that** said winding assembly comprises a mandrel (110) which rotates about the longitudinal axis (X-X) and which has, inserted inside it, a pin (111) for supporting the support ring (113) for the seal, which is locked in position in the longitudinal direction (X-X).

7. Apparatus according to Claim 6, **characterized in that**, during winding, the support ring (113) is arranged with its circumferential edge radially inserted between the jaws (211,212) and axially centred with respect thereto.

8. Apparatus according to Claim 1, **characterized in that** said strips (1a, 1b) have a different width in the axial direction (X-X).

9. Apparatus according to Claim 8, **characterized in that** the first circular jaw (211) and the second circular jaw (212) arranged opposite each other are spaced in the longitudinal direction (X-X) by an amount greater than the width of the strip (1a) of smaller width and less than the width of the strip (1b) of greater width.

10. Apparatus according to Claim 1, **characterized in that** it comprises means (500) for programming and controlling the various actuating movements and working sequences.

11. Machine for winding continuous strips (1a, 1b) having different mechanical properties and spirally wound onto a support ring (113), **characterized in that** it comprises an apparatus according to Claim 1.

12. Machine according to Claim 11, **characterized in that** it is seal forming machine.
